(19) Europäisches Patentamt
European Patent Office
Office européen des brevets

(11) **EP 2 533 254 B1**

(12) **EUROPEAN PATENT SPECIFICATION**

(45) Date of publication and mention
of the grant of the patent:
**04.11.2015 Bulletin 2015/45**

(51) Int Cl.:
*H01B 13/00* [(2006.01)]    *C07F 5/06* [(2006.01)]
*H01B 1/22* [(2006.01)]

(21) Application number: **11739853.7**

(86) International application number:
**PCT/JP2011/052323**

(22) Date of filing: **04.02.2011**

(87) International publication number:
**WO 2011/096505 (11.08.2011 Gazette 2011/32)**

(54) **REDUCING AGENT COMPOSITION FOR CONDUCTIVE METAL PASTE**

REDUKTIONSMITTELZUSAMMENSETZUNG FÜR LEITFÄHIGE METALLPASTE

COMPOSITION D'AGENT REDUCTEUR POUR PATE METALLIQUE CONDUCTRICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2010 JP 2010024813**

(43) Date of publication of application:
**12.12.2012 Bulletin 2012/50**

(73) Proprietor: **Namics Corporation
Niigata-shi, Niigata 950-3131 (JP)**

(72) Inventors:
• **MIZUMURA, Noritsuka
Niigata 950-3131 (JP)**

• **YAMAGUCHI, Takashi
Niigata 950-3131 (JP)**

(74) Representative: **Hoffmann Eitle
Patent- und Rechtsanwälte PartmbB
Arabellastraße 30
81925 München (DE)**

(56) References cited:
**EP-A1- 1 804 256        WO-A1-02/089152
JP-A- 2006 080 013        JP-A- 2009 298 951**

• **DATABASE WPI Week 200670 Thomson
Scientific, London, GB; AN 2006-672374
XP002735024, & JP 2006 225426 A (HOKURIKU
TORYO KK) 31 August 2006 (2006-08-31)**

**Description**

TECHNICAL FIELD

The present invention relates to a reducing agent composition for the conductive metal paste such as a conductive metal paste, for example, a conductive paste for forming a circuit, a die bonding agent, an anisotropic conductive paste, a paste for an external electrode of ceramic chip parts, a conductive adhesive, etc.

BACKGROUND ART

As one of the mounting techniques of a semiconductor, there have been known to use a flip chip bonding using a solder comprising a lead-tin alloy. For example, a solder has been used for bonding chip parts or discrete parts in the formation of a circuit using a printed wiring board. However, if the solder is used, lead is dissolved out from the disposed electronic equipments due to acidic rain, so that there has been anxious about an influence of the environment on leading to contamination of ground water, etc. In recent years, in place of the conventional solders, it has been proposed to use a conductive adhesive. The conductive adhesive has been used as an adhesive for surface mounting to bond chip parts or discrete parts to a printed wiring board, or an adhesive for die-bonding which is to bond an integrated circuit chip to a substrate.

The conductive paste such as a conductive adhesive is, in general, a material in which metal conductive particles such as silver, copper, nickel or an alloy thereof, etc., are dispersed as a conductive filler in a resin such as an epoxy resin, acrylic resin, phenol resin, etc. As the conductive filler, silver has been generally used, but when the silver is used as the conductive filler, there is a problem of easily causing migration when a voltage is applied to the printed wiring board. As a filler which does not cause migration, is stable even at a high temperature, and provides high conductivity, it has been proposed to use a silver-tin alloy powder, etc.

Also, when chip parts (chip capacitor, chip resistor, etc.) for surface mounting having a tin-plated electrode with a paste adhesive using silver as a conductive filler, the tin of the tin-plating and the silver filler cause a Galvanic Cell effect under high temperature and high humidity. Thus, the resistance value increases due to corrosion of the tin-plating, and allowing it to stand under high temperature, tin of the tin-plating migrates into the silver filler so that there are problems that strength lowers due to embrittlement of the tin-plating, and the resistance value increases due to deterioration of the tin by oxidation. This problem can be overcome by using a silver-tin alloy powder as a conductive filler since stabilization of the connection resistance value with the tin-plating can be realized.

However, when silver-tin alloy powder is used as a conductive filler for a conductive paste, tin is easily oxidized so that a metal oxide is formed, which becomes a main factor to increase a resistance value of the conductive paste. Also, according to oxidation of tin-plating itself, it causes a factor to increase a resistance value similarly.

In a conductive paste using silver-tin alloy powder, etc., as a conductive filler, it has been proposed a composition for adhesion to which a corrosion inhibiting agent such as 8-hydroxyquinoline, etc. was added to control formation of a metal oxide with regard to a metal having a larger ionization tendency such as tin, etc. (Patent Literature 1).

Also, it has been proposed a conductive adhesive comprising a resin (base resin) and a silver-tin filler, to which a chelating agent such as hydroxyquinolines, etc., was added as an additive for lowering a contact resistance value (Patent Literature 2).

As the others, it has been proposed a composition containing a metal salt of 8-hydroxyquinoline or 8-hydroxyquinoline derivatives as an adhesive and conductive promoter for a die-bonding composition (Patent Literature 3).

PRIOR ART LITERATURE

PATENT LITERATURES

[Patent Literature 1] JP 2006- 21524A
[Patent Literature 2] JP 2006-225426A
[Patent Literature 3] JP 2007- 96302A

DISCLOSURE OF THE INVENTION

PROBLEMS TO BE SOLVED BY THE INVENTION

However, as proposed in Patent Literature 1 or 2, in the conductive paste such as a conductive adhesive using a silver-tin alloy powder as a conductive filler, if 8-hydroxyquinoline is added as a corrosion inhibiting agent or a chelating agent to control formation of a metal oxide, the 8-hydroxyquinoline and tin are reacted to form a complex, and the complex reacts with a resin, for example, an epoxy resin contained in the conductive paste to cause increase in a viscosity of the composition whereby a pot life of the conductive paste is lowered. In Patent Literature 3, if 8-hydroxyquinoline or 8-hydroxyquinoline derivatives is/are added to a die-bonding composition, curing is promoted to lower a pot life.

An object of the present invention is to improve a pot life of a conductive metal paste, and to provide a reducing agent composition for the conductive metal paste and a process for preparing the same, and a conductive metal paste, which can prevent from fluctuation of a connection resistance value.

MEANS TO SOLVE THE PROBLEMS

The present inventors have found that by formulating at least one compound selected from the group consisting of a hydroxyquinoline compound, an aromatic amino alcohol compound, an aromatic amine compound, an anthraquinone compound, an indole compound and an indane compound, and an organic aluminum compound as a reducing agent composition for the conductive metal paste, the pot life of the conductive metal paste containing the reducing agent composition can be improved, and fluctuation of connection resistance value of the cured product comprising the conductive metal paste can be controlled.

The present invention relates to a reducing agent composition for the conductive metal paste comprising at least one compound selected from the group consisting of a hydroxyquinoline compound, an aromatic amino alcohol compound, an aromatic amine compound, an anthraquinone compound, an indole compound and an indane compound, and an organic aluminum compound.

The present invention relates to a conductive metal paste comprising the above-mentioned reducing agent composition for the conductive metal paste, metal conductive particles and a resin.

The present invention relates to a process for preparing the reducing agent composition for the conductive metal paste comprising the step of mixing at least one compound selected from the group consisting of a hydroxyquinoline compound, an aromatic amino alcohol compound, an aromatic amine compound, an anthraquinone compound, an indole compound and an indane compound, and an organic aluminum compound at a temperature of 5 to 30°C for within 30 minutes.

EFFECTS OF THE INVENTION

The reducing agent composition for the conductive metal paste of the present invention can improve a pot life of a conductive metal paste containing the reducing agent composition for the conductive metal paste, by containing at least one compound selected from the group consisting of a hydroxyquinoline compound, an aromatic amino alcohol compound, an aromatic amine compound, an anthraquinone compound, an indole compound and an indane compound, and an organic aluminum compound, whereby fluctuation of connection resistance value of the cured product comprising the conductive metal paste can be controlled.

BEST MODE TO CARRY OUT THE INVENTION

The present invention is directed to a reducing agent composition for the conductive metal paste comprising at least one compound selected from the group consisting of a hydroxyquinoline compound, an aromatic amino alcohol compound, an aromatic amine compound, an anthraquinone compound, an indole compound and an indane compound, and an organic aluminum compound which forms a complex with the compound. Among the hydroxyquinoline compound, the amino alcohol compound, the aromatic amine compound, the anthraquinone compound, the indole compound and the indane compound, the hydroxyquinoline compound or the aromatic amino alcohol compound is preferred.

In the reducing agent composition of the present invention, at least part of at least one of the compound selected from the group consisting of a hydroxyquinoline compound, an aromatic amino alcohol compound, an aromatic amine compound, an anthraquinone compound, an indole compound and an indane compound partially forms a complex with aluminum in the organic aluminum compound. Since at least part of the above-mentioned compound previously forms a complex partially with the aluminum, it can be expected that, when the reducing agent composition is added to conductive metal paste, the above-mentioned compound and the metal in the conductive metal paste do not immediately react to each other so that a complex is not formed. Therefore, when the reducing agent composition of the present invention is added to a conductive metal paste, increase in viscosity caused by the reaction between a complex formed by the above-mentioned compound and the metal in the conductive metal paste with the resin in the conductive metal paste can be controlled whereby the pot life can be improved.

The conductive metal paste containing the reducing agent composition of the present invention can control fluctuation of the connection resistance value of the cured product comprising the conductive metal paste, since the compound which had formed a complex with aluminum separates by the heat at the curing and so acts as to remove an oxide film of the metal oxide in the conductive metal paste.

The content of the organic aluminum compound in the reducing agent composition for the conductive metal paste is preferably 5 to 150 parts by weight, more preferably 10 to 100 parts by weight, further preferably 15 to 40 parts by weight of the organic aluminum compound based on 100 parts by weight of at least one compound selected from the group consisting of the hydroxyquinoline compound, the aromatic amino alcohol compound, the aromatic amine compound, the anthraquinone compound, the indole compound and the indane compound. If the content of the organic aluminum compound in the reducing agent composition for the conductive metal paste is 5 to 150 parts by weight based on 100 parts by weight of the above-mentioned compounds, a pot life of the conductive metal paste containing the reducing agent composition for the conductive metal paste can be improved, and fluctuation of the connection resistance value of the cured material comprising the conductive metal paste can be controlled.

The hydroxyquinoline compound may be preferably and specifically mentioned at least one compound selected from the group consisting of 8-hydroxy-quinoline, 5,7-dibromo-8-hydroxyquinoline, 5,7-dichloro-8-hydroxyquinoline, 5,7-diiodo-8-hydroxyquinoline, 5-chloro-8-hydroxyquinoline, 2-methyl-8-hydroxyquinoline, 5-amino-8-hydroxyquinoline, 6-hydroxyquinoline and 2-hydroxyquinoline. Among these, the hydroxyquinoline compound is more preferably at least one compound selected from the group consisting of 2-methyl-8-hydroxyquinoline, 5-amino-8-hydroxyquinoline and 8-hydroxyquinoline. Particularly preferred is 8-hydroxyquinoline (8-quinolinol).

The aromatic amino alcohol compound may be preferably and specifically mentioned at least one compound selected from the group consisting of 2-amino-1-phenyl-1,3-propanediol, 2-amino-3-phenyl-1-propanol, 2-amino-1-phenyl-1-propanol, 2-amino-1,2-diphenylethanol, 2-(dibutylamino)-1-phenyl-1-propanol, 2-amino-2-phenylethanol, 2-(4-aminophenyl)ethanol, 2-(2-aminophenyl)ethanol, 2-[4-(dimethyl-amino)phenyl] ethanol and 2-amino-1-(4-nitrophenyl)-1,3-propanediol. Among these, the aromatic amino alcohol compound is more preferably at least one compound selected from the group consisting of 2-amino-1-phenyl-1,3-propanediol, 2-amino-3-phenyl-1-propanol, 2-amino-2-phenylethanol and 2-(4-aminophenyl)ethanol. Particularly preferred is/are 2-amino-1-phenyl-1,3-propanediol and/or 2-(4-aminophenyl)-ethanol.

The aromatic amine compound is preferably a compound having at least one functional group selected from the group consisting of a hydroxyl group, a carboxyl group and an acetic acid group, in addition to the amino group, as the substituent(s) of a monocyclic or a polycyclic aromatic ring, or a substituent of a side chain of a monocyclic or a polycyclic aromatic ring, to partially form a complex with the aluminum in the organic aluminum compound. The side chain of the monocyclic or polycyclic aromatic ring of the aromatic amine compound may be mentioned an alkyl group having 1 to 4 carbon atoms, etc. The aromatic amine compound may be preferably and specifically mentioned at least one compound selected from the group consisting of 2-aminophenol, 3-aminophenol, 4-aminophenol, 4-aminophenylacetic acid, 8-amino-2-naphthol, 6-amino-1-naphthol, 5-amino-2-naphthol, 5-amino-1-naphthol, 2-amino-4-methylphenol, 4-amino-3-methylphenol, 5-aminosalicylic acid, 3-hydroxyanthranilic acid, 3-aminobenzoic acid, 4-aminobenzoic acid, 4-(2-aminoethyl)phenol, 2-amino-4-phenylphenol and 4-aminohippuric acid. Among these, the aromatic amine compound is more preferably at least one compound selected from the group consisting of 8-amino-2-naphthol, 6-amino-1-naphthol, 5-amino-2-naphthol and 5-amino-1-naphthol. It is particularly preferably 8-amino-2-naphthol and/or 5-amino-2-naphthol.

The anthraquinone compound is preferably a compound having an amino group and a hydroxyl group as the substituent(s) to partially form a complex with the aluminum in the organic aluminum compound. The anthraquinone compound may be preferably and specifically mentioned at least one compound selected from the group consisting of 1-acetamido-4-hydroxyanthraquinone, 1,5-diamino-4,8-dihydroxyanthraquinone, 2-amino-3-hydroxyanthraquinone and 1-amino-4-hydroxyanthraquinone. Among these, the anthraquinone compound is more preferably 1,5-diamino-4,8-dihydroxyanthraquinone.

The indole compound is preferably a compound having an amino group, and/or at least one functional group selected from the group consisting of a hydroxyl group, a carboxyl group, a lactic acid group, an acetic acid group, an acrylic acid group and a butyric acid group as the substituent(s) to partially form a complex with the aluminum in the organic aluminum compound. The indole compound may be preferably and specifically mentioned at least one compound selected from the group consisting of indole-3-carboxylic acid, 3-indole lactic acid, 3-indole acetic acid, 3-indole acrylic acid, 3-indole butyric acid, 3-indole propionic acid, 5-hydroxyindol-3-acetic acid, 5-methoxyindole-2-carboxylic acid, 5-methoxyindole-3-acetic acid, indole-2-carboxylic acid, indole-3-carboxylic acid, indole-4-carboxylic acid, indole-5-carboxylic acid, indole-6-carboxylic acid, 5-hydroxy-DL-tryptophan, 5-hydroxy-L-tryptophan, 5-methyl-DL-tryptophan, 2-amino-3-(3-indolyl)propionic acid, 2-amino-3-(3-indolyl)-propanol, 3-indolethanol, 3-indolmethanol, 3-indolpropanol, 4-hydroxyindole, 5-hydroxyindole, 7-ethyl-3-indolethanol and N-acetyl-5-hydroxytryptamine. Among these, the indole compound is more preferably at least one compound selected from the group consisting of 4-hydroxyindole and 5-hydroxyindole.

The indane compound is preferably a compound having an amino group and a hydroxyl group as the substituent(s) to partially form a complex with the aluminum in the organic aluminum compound. The indane compound is specifically and preferably 1-amino-2-indanole.

At least one compound selected from the group consisting of the hydroxyquinoline compound, the aromatic amino alcohol compound, the aromatic amine compound, the anthraquinone compound, the indole compound and the indane compound may be used as a single compound alone or two or more kinds in combination. When two or more kinds of the above-mentioned compounds are used in combination, it is preferred to use the hydroxyquinoline compound and the above-mentioned compound other than the hydroxyquinoline compound in combination, or two or more kinds of the aromatic amino alcohol compounds are used in combination. When the hydroxyquinoline compound and the above-mentioned compound other than the hydroxyquinoline compound are used in combination, an amount of the compound other than the hydroxyquinoline is preferably 3 to 100 parts by weight, more preferably 4 to 50 parts by weight, further preferably 5 to 10 parts by weight based on 100 parts by weight of the hydroxyquinoline compound. If the content of the above-mentioned compound other than the hydroxyquinoline compound is 3 to 100 parts by weight based on 100 parts by weight of the hydroxyquinoline compound, the pot life of the conductive metal paste containing the reducing agent composition for the conductive metal paste can be improved, and fluctuation of the connection resistance value of the cured material comprising the conductive metal paste can be controlled.

The organic aluminum compound to be used in the present invention is preferably an organic aluminum compound capable of forming a complex with the hydroxyquinoline compound.

The organic aluminum compound may be preferably and specifically mentioned at least one compound selected from the group consisting of acetalkoxy aluminum diisopropylate, aluminum isopropylate secondary butylate, aluminum tris(ethylacetoacetate), aluminum trisacetylacetate, aluminum bisethylacetoacetate monoacetylacetonate, aluminum trisethylacetoacetate, aluminum ethylacetoacetate-diisopropylate, aluminum oxide isopropoxide polymer, aluminum oxide octylate trimer, aluminum oxide stearate trimer, aluminum oxide laurate trimer, aluminum ethylate, aluminum isopropylate and aluminum secondary butylate. Among these, the organic aluminum compound is/are more preferably acetalkoxy aluminum diisopropylate and/or aluminum isopropylate secondary butylate.

The reducing agent composition for the conductive metal paste of the present invention further preferably contains an epoxy resin as a dispersing material. When the reducing agent composition for the conductive metal paste contains an epoxy resin, the hydroxyquinoline compound and the organic aluminum compound can be mixed uniformly.

A content of the epoxy resin in the reducing agent composition for the conductive metal paste is preferably 50 to 300 parts by weight, more preferably 70 to 200 parts by weight, further preferably 80 to 150 parts by weight based on 100 parts by weight of at least one compound selected from the group consisting of the hydroxyquinoline compound, the aromatic amino alcohol compound, the aromatic amine compound, the anthraquinone compound, the indole compound and the indane compound. When the content of the epoxy resin in the reducing agent composition for the conductive metal paste is 50 to 300 parts by weight based on 100 parts by weight of the above-mentioned compound, the above-mentioned compound and the organic aluminum compound can be mixed uniformly, the pot life of the conductive metal paste containing the reducing agent composition for the conductive metal paste can be improved, and fluctuation of the connection resistance value of the cured material comprising the conductive metal paste can be controlled.

The epoxy resin may be mentioned an epoxy resin such as a bisphenol A type, bisphenol F type, phenol novolac type, biphenyl type, triphenolmethane type, naphthalene type, ortho novolac type, dicyclopentadiene type, aminophenol type, alicyclic, etc., and silicone epoxy, etc. These resins may be used alone or in combination of two or more kinds. Among these, a liquid state epoxy resin is preferred, and the liquid state epoxy resin may be mentioned a bisphenol A type epoxy resin having an average molecular weight of about 400 or less; a branched polyfunctional bisphenol A type epoxy resin such as p-glycidoxyphenyl dimethyltolyl bisphenol A diglycidyl ether; a bisphenol F type epoxy resin; a phenol novolac type epoxy resin having an average molecular weight of about 570 or less; a biphenyl type epoxy resin such as 3,3',5,5'-tetramethyl-4,4'-bis(glycidyloxy)-1,1'-biphenyl; a triphenol methane type epoxy resin such as $\alpha$-2,3-epoxypropoxyphenyl-$\omega$-hydropoly(n=1 to 7)[2-(2,3-epoxypropoxy)-benzyliden-2,3-epoxypropoxyphenylene]; a naphthalene type epoxy resin comprising at least one of 1,6-bis(glycidyloxy)naphthalene and 2,7-dihydroxynaphthalene as a constitutional component; an ortho novolac type epoxy resin having an average molecular weight of 700 to 1400; a dicyclopentadiene type epoxy resin having an average molecular weight of 500 to 1000; an alicyclic epoxy resin comprising at least one of vinyl(3,4-cyclohexene)dioxide, (3,4-epoxycyclohexyl)methyl 3,4-epoxycyclohexylcarboxylate, bis(3,4-epoxy-6-methylcyclohexylmethyl) adipate and 2-(3,4-epoxy-cyclohexyl)5,1-spiro(3,4-epoxycyclohexyl)-m-dioxane as a constitutional component; a glycidyl ester type epoxy resin comprising at least one of diglycidyl hexahydrophthalate, 3- diglycidyl methylhexahydrophthalate and diglycidyl hexahydroterephthalate as a constitutional component; a glycidylamine type epoxy resin comprising at least one of diglycidylaniline, diglycidyltoluidine, triglycidyl-p-aminophenol, tetraglycidyl-m-xylylene diamine and tetraglycidyl bis(aminomethyl)cyclohexane as a constitutional component; and a hydantoin type epoxy resin comprising 1,3-diglycidyl-5-methyl-5-ethylhydantoin as a constitutional component, etc.

The preparation method of the reducing agent composition for the conductive metal paste of the present invention comprises the step of mixing at least one compound selected from the group consisting of the hydroxyquinoline compound, the aromatic amino alcohol compound, the aromatic amine compound, the anthraquinone compound, the indole compound and the indane compound, with the organic aluminum compound at a temperature of 5 to 30°C for within 30 minutes. The temperature for mixing the above-mentioned compound and the organic aluminum compound is preferably 10 to 30°C, more preferably 15 to 25°C. By mixing the above-mentioned compound and the organic aluminum compound at the temperature of 5 to 30°C, at least part of the above-mentioned compound and the metal contained in the organic aluminum compound form a complex, and when the reducing agent composition for the conductive metal paste is added to the conductive metal paste, the pot life can be improved. If the above-mentioned temperature exceeds 30°C, when the reducing agent composition for the conductive metal paste is added to the conductive metal paste, there is a case where the effect of improving the pot life is lowered.

The reducing agent composition for the conductive metal paste of the present invention is prepared by firstly charging at least one compound selected from the group consisting of the hydroxyquinoline compound, the aromatic amino alcohol compound, the aromatic amine compound, the anthraquinone compound, the indole compound and the indane compound, the organic aluminum compound, and, if necessary, other compound(s) into a mixing tank for stirring such as a flask, etc., and may be mixed together. Or else, at least one compound selected from the group consisting of the hydroxyquinoline compound, the aromatic amino alcohol compound, the aromatic amine compound, the anthraquinone compound, the indole compound and the indane compound, the organic aluminum compound, and, if necessary, an epoxy resin are mixed, and then, if necessary, other compound(s) may be added and mixed therewith. It is preferred to carry out dispersing and mixing so that the graininess of the compound in the reducing agent composition for the conductive metal paste is 5 $\mu$m or less.

The reducing agent composition for the conductive metal paste of the present invention can be mixed by using, for example, a Raikai mixer (crusher), a pot mill, a triple roll mill, a rotary mixer, a biaxial mixer, etc.

Further, the process for preparing the reducing agent composition for the conductive metal paste preferably contains the steps of mixing at least one compound selected from the group consisting of the hydroxyquinoline compound, the aromatic amino alcohol compound, the aromatic amine compound, the anthraquinone compound, the indole compound and the indane compound, and the organic aluminum compound, and then, allowing to stand at the temperature of 0 to 15°C for 5 hours or longer. By allowing the above-mentioned compound and the organic aluminum compound after mixing to stand at the temperature of 0 to 15°C for 5 hours or longer, a stable composition for the conductive metal paste can be obtained, which does not cause any change such as gellation, etc., and which contributes to improvement in the pot life. The mixture containing at least one compound selected from the group consisting of the hydroxyquinoline compound, the aromatic amino alcohol compound, the aromatic amine compound, the anthraquinone compound, the indole compound and the indane compound, and the organic aluminum compound, and, if necessary, the other compound(s), and an epoxy resin after the mixture is allowed to stand, for example, at a cool and dark place at 0 to 15°C such as a thermostat chamber, etc., preferably for 5 hours or longer, more preferably for 5 to 30 hours, and further preferably 5 to 24 hours.

The present invention is directed to the conductive metal paste comprising the above-mentioned reducing agent composition for the conductive metal paste, the metal conductive particles and the resin. The conductive metal paste is improved in the pot life, and even when it contains metal conductive particles which comprise a metal easily oxidized, fluctuation of the connection resistance value of the cured material comprising the conductive metal paste can be controlled.

The conductive metal paste may be mentioned, for example, a conductive paste for forming a circuit, a paste for external electrode of ceramic chip parts such as a Multi-layer Ceramic Capacitor (MLCC), etc., a die bonding agent for bonding semiconductor chips, etc., an anisotropic conductive paste (ACP) which is a kind of an underfill agent for flip chip, a conductive adhesive for mounting a semiconductor or electronic parts, etc.

The metal conductive particles contained in the conductive metal paste contains a metal selected from the group consisting of silver, tin, copper, nickel, indium, bismuth, zinc and aluminum, and preferably a metal powder comprising at least one selected from the group consisting of silver, tin, copper, nickel, indium, bismuth, zinc, aluminum and an alloy thereof. Also, it may be a single powder selected from silver powder, tin powder, copper powder, nickel powder, indium powder, bismuth powder, zinc powder, aluminum powder and an alloy powder thereof, or a mixed powder of two or more kinds thereof. Among these, preferred are silver-tin alloy powder, a mixed powder of silver powder and tin powder, a mixed powder of silver-tin alloy powder and indium powder, and a mixed powder of silver powder, tin powder and indium powder.

The shape of the metal powder may be spherical or scaly, or may be other shapes, for example, needle or dendrite, or a mixture thereof. An average particle size thereof is preferably 0.1 to 30 $\mu$m, more preferably 2 to 20 $\mu$m. The average particle size mentioned in the present specification means a median diameter in terms of a volume, measured by a laser diffraction method, irrespective of the shape of the metal powder.

The resin contained in the conductive metal paste is preferably a resin which acts as a binder, and said resin may be a thermoplastic resin or a thermosetting resin, and a thermosetting resin is preferred. The thermoplastic resin may be exemplified by an acrylic resin, an ethyl cellulose, a polyester, a polysulfone, a phenoxy resin, a polyimide, etc. The thermosetting resin may be preferably mentioned an amino resin such as an urea resin, a melamine resin and a guanamine resin; an epoxy resin such as a bisphenol A type, bisphenol F type, phenol novolac type, alicyclic, ortho novolac type, naphthalene type, biphenyl type, triphenolmethane type, aminophenol type, etc; an oxetane resin; a phenol resin such as a resole type and novolac type, a novolac type allylphenol resin; a silicone-modified organic resin such as a silicone epoxy and a silicone polyester. These resins may be used singly or in combination of two or more kinds.

Among these, an epoxy resin and a novolac type phenol resin are preferred since excellent adhesiveness can be obtained and heat resistance is also excellent even when the resin is formulated with an amount which does not impair conductivity, and bisphenol A type and bisphenol F type epoxy resin are particularly preferred.

When a resin which is a liquid state at a normal temperature is used as the resin, a vehicle can be prepared without using an organic solvent, and a drying step can be omitted. Such a liquid state resin may be exemplified by a liquid state epoxy resin, a liquid state phenol resin, etc. The liquid state epoxy resin may be exemplified by a bisphenol A type epoxy resin having an average molecular weight of about 400 or less; a branched polyfunctional bisphenol A type epoxy resin such as p-glycidoxyphenyl-dimethyltolyl bisphenol A diglycidyl ether; a bisphenol F type epoxy resin; a phenol novolac type epoxy resin having an average molecular weight of about 570 or less; a biphenyl type epoxy resin such as 3,3',5,5-tetramethyl-4,4'-bis(glycidyloxy)-1,1'-biphenyl; a triphenolmethane type epoxy resin such as $\alpha$-2,3-epoxypropoxyphenyl-$\omega$-hydropoly(n=1 to 7)[2-(2,3-epoxypropoxy)benzyliden-2,3-epoxypropoxyphenylene]; a naphthalene type epoxy resin comprising at least one of 1,6-bis(glycidyloxy)-naphthalene and 2,7-dihydroxynaphthalene as a constitutional component; an ortho novolac type epoxy resin having an average molecular weight of 700 to 1400; a dicyclopentadiene type epoxy resin having an average molecular weight of 500 to 1000; an alicyclic epoxy resin comprising at least one of vinyl(3,4-cyclohexene)dioxide, (3,4-epoxycyclohexyl)methyl 3,4-epoxycyclohexylcarboxylate, bis(3,4-epoxy-6-methylcyclohexylmethyl) adipate and 2-(3,4-epoxycyclohexyl)5,1-spiro(3,4-epoxycyclohexyl)-m-dioxane as a constitutional component; a glycidyl ester type epoxy resin comprising at least one of diglycidyl hexahydrophthalate, diglycidyl 3-methylhexahydrophthalate and diglycidyl hexahydroterephthalate as a constitutional component; a glycidylamine type epoxy resin comprising at least one of diglycidylaniline, diglycidyltoluidine, triglycidyl-p-aminophenol, tetraglycidyl-m-xylylene diamine and tetra-glycidylbis(aminomethyl)cyclohexane as a constitutional component; and a hydantoin type epoxy resin comprising 1,3-diglycidyl-5-methyl-5-ethylhydantoin as a constitutional component.

Also, to the liquid state resin may be mixed a resin which is miscible, and is a solid or shows extremely high viscosity at normal temperature within the range in which the mixed system shows fluidity. Such a resin may be exemplified by an epoxy resin such as a high-molecular weight bisphenol A type epoxy resin, a biphenyl type epoxy resin, a phenol novolac type epoxy resin, an ortho novolac type epoxy resin, a triphenolmethane type epoxy resin, a dicyclopentadiene type epoxy resin and a tetrabromobisphenol A type epoxy resin; and a novolac phenol resin, etc.

In case of the epoxy resin, as a curing mechanism, either a self-curing type resin, or a curing agent such as amines, imidazoles, acid anhydride or onium salts or a curing accelerator may be used, and an amino resin or a phenol resin may be used as a curing agent of an epoxy resin.

The representative epoxy resin to be used in the present invention is a resin cured by a phenol resin. The phenol resin may be any material so long as it is a condensate at an initial stage of the phenol resin which can be usually used as a curing agent of the epoxy resin, and exemplified by a resole type, a novolac type ortho-allylphenol novolac type, allylphenol novolac type, etc. To relax the stress at the time of curing and to obtain excellent heat cycle resistance, its 50% by weight or more is preferably an alkyl novolac type or allylphenol novolac type phenol resin. In the case of the alkyl resole type phenol resin, an average molecular weight is preferably 2,000 or higher to obtain excellent printing suitability. In these alkyl resole type or alkyl novolac type phenol resins, the alkyl group is preferably used those having 1 to 18 carbon atoms, and preferably those having 2 to 10 carbon atoms such as an ethyl, propyl, butyl, pentyl, hexyl, octyl, nonyl and decyl group.

The conductive metal paste of the present invention is preferably a material containing 2 to 10% by weight of the reducing agent composition for the conductive metal paste, 60 to 92% by weight of the metal conductive particles and 6 to 30% by weight of the resin. A formulation amount of the conductive metal particles in the conductive metal paste is more preferably 60 to 90% by weight, and further preferably 60 to 87% by weight. A formulation amount of the reducing agent composition for the conductive metal paste in the conductive metal paste is preferably 3 to 10% by weight, and more preferably 5 to 9% by weight.

To the conductive metal paste of the present invention can be further added conventionally used additives such as a dispersant, a rheology control agent, a pigment, a bleed control agent, a surface tension regulator, nano silica, silica, etc. within the range which does not impair the effects of the present invention.

EXAMPLES

In the following, the present invention is explained in more detail by referring to Examples and Comparative examples. The present invention is not limited by these Examples. In these examples, all parts mean parts by weight, and % means % by weight.

(Examples 1 to 11 and Comparative examples 1 to 7)

[Preparation of reducing agent composition for the conductive metal paste]

Reducing agent compositions for conductive metal pastes were prepared according to the compositions shown in Table 1. First, each component except for the epoxy resin was thrown into a mixing tank, mixed by using a spatula, and then, the epoxy resin was added and mixed by using a triple roll mill to obtain a dispersion. The mixed time was within 30 minutes in total. The graininess of the compound in the dispersion was 5 μm or less. The obtained dispersion was allowed to stand in a thermostat chamber at 5°C for 16 hours to prepare a reducing agent composition for the conductive metal paste. The graininess of the compound in the dispersion was measured by a grind gauge according to the streak line method of JIS standard K5400'-1990.

[Preparation of conductive metal paste]

The above-mentioned reducing agent composition for the conductive metal paste and other components were formulated with the ratio shown in Table 1, and mixed by using a triple roll mill to prepare conductive metal pastes. Pot life, connection resistance value and strength of the conductive metal pastes were measured by the following methods. The results are shown in Table 1.

[Measurement of pot life]

The initial viscosity of the above-mentioned conductive metal paste immediately after the preparation and the viscosity of the conductive metal paste after allowing to stand under closed state at 25°C for 24 hours were measured by the E type viscometer (spindle with 3° corn R (diameter) of 9.7, number of rotation: 1 rpm/min, 25°C), and the pot life (%) was measured from the measured values according to the following formula (1).

$$\text{Pot life (\%)} = (\text{Viscosity after allowing to stand for 24 hours} - \text{Initial viscosity})/\text{Initial viscosity} \times 100 \cdots (1)$$

[Connection resistance value]

A 1608 size Sn-plated electrode MLCC (Multi-layer Ceramic Capacitor) was used as a part, and an alumina substrate of an Ag thick-film electrode was used as a substrate. To the alumina substrate was coated a conductive metal paste, the above-mentioned parts (MLCC) were mounted thereon without load, and the conductive metal paste was cured at 150°C for 30 minutes to obtain a test piece. After the temperature of the test piece had reached room temperature (20°C), probes manufactured by HIOKI E.E. Corporation were connected to the Sn-plated portion and to the Ag thick-film electrode, 10 mA of a current was passed therethrough by using a digital multi-meter manufactured by Yokogawa Electric Corporation and a programmable direct-current voltage electric source manufactured by Yokogawa Electric Corporation. The voltage at that time was measured to calculate the connection resistance value (measured by the four-terminal method).

[Strength]

By using a universal tester (manufactured by AIKOH Engineering Co., Ltd.), shear strength of the test pieces in which the above-mentioned connection resistance value had been obtained was measured.

[Connection resistance value after continuous printing]

By using the above-mentioned conductive metal paste as the above-mentioned alumina substrate, screen printing was repeated for 1000 times. Thereafter, to bond the above-mentioned parts (MLCC), the above-mentioned conductive metal paste was further coated, the above-mentioned parts (MLCC) were mounted thereon without a load, and the conductive metal paste was cured at 150°C for 30 minutes to obtain a test piece. After the temperature of the test piece had reached room temperature (20°C), probes manufactured by HIOKI E.E. Corporation were connected to the Sn-plated portion and to the Ag thick-film electrode, 10 mA of a current was passed therethrough by using a digital multi-meter manufactured by Yokogawa Electric Corporation and a programmable direct-current voltage electric source manufactured by Yokogawa Electric Corporation. The voltage at that time was measured to calculate the connection resistance value (measured by the four-terminal method).

[Change in connection resistance value after continuous printing]

Change in the connection resistance value after continuous printing was obtained according to the following formula (2).

Change in connection resistance value (mΩ) after continuous printing=Connection resistance value (mΩ) after continuous printing − Connection resistance value (mΩ) ⋯ (2)

[Table 1]

| | | Example 1 | Example 2 | Example 3 | Example 4 | Example 5 | Example 6 | Example 7 | Example 8 | Example 9 | Example 10 | Example 11 | Example 12 | Comparative example 1 | Comparative example 2 | Comparative example 3 | Comparative example 4 |
|---|---|---|---|---|---|---|---|---|---|---|---|---|---|---|---|---|---|
| | | Parts by weight | Parts by weight | Parts by weight | Parts by weight | Parts by weight | Parts by weight | Parts by weight | Parts by weight | Parts by weight | Parts by weight | Parts by weight | Parts by weight | Parts by weight | Parts by weight | Parts by weight | Parts by weight |
| Reducing agent composition for Conductive metal paste | 8-Quinolinol | 100 | 100 | 100 | 100 | 100 | 100 | 100 | 100 | 100 | 100 | 100 | – | 100 | 100 | 100 | 100 |
| | 2-Amino-1-phenyl-1,3-propanediol | 6.6 | 6.6 | 6.6 | 6.6 | – | – | – | – | 10 | 100 | 6.6 | 6.6 | 6.6 | – | 10 | 6.6 |
| | 2-(4-Amino-phenyl)ethanol | – | – | – | – | – | – | – | – | – | – | – | 100 | – | – | – | – |
| | ALM | 25 | 16.7 | 33.3 | – | 25 | 16.7 | 33.3 | 37.5 | 37.5 | 100 | 25 | 25 | – | – | – | – |
| | AMD | – | – | – | 25 | – | – | – | – | – | – | – | – | – | – | – | – |
| | Epoxy resin*1 | 100 | 100 | 100 | 100 | 100 | 100 | 100 | 150 | 150 | 300 | 100 | 100 | 100 | 100 | 150 | 100 |
| | | % by weight | % by weight | % by weight | % by weight | % by weight | % by weight | % by weight | % by weight | % by weight | % by weight | % by weight | % by weight | % by weight | % by weight | % by weight | % by weight |
| Conductive metal paste | Reducing agent composition for the conductive metal paste | 6.84 | 6.61 | 7.07 | 6.84 | 6.84 | 6.61 | 6.89 | 5.73 | 5.92 | 5.96 | 6.84 | 6.84 | 6.80 | 5.96 | 5.21 | 6.84 |
| | Epoxy resin*1 | 4.33 | 4.34 | 4.32 | 4.33 | 4.33 | 4.34 | 4.33 | 4.38 | 4.38 | 4.37 | 4.33 | 4.33 | 4.33 | 4.37 | 4.41 | 4.33 |
| | Phenol resin | 2.17 | 2.17 | 2.16 | 2.17 | 2.17 | 2.17 | 2.17 | 2.19 | 2.19 | 2.19 | 2.17 | 2.17 | 2.17 | 2.19 | 2.20 | 2.17 |
| | Curing catalyst | 0.98 | 0.99 | 0.98 | 0.98 | 0.98 | 0.99 | 0.98 | 1.00 | 0.99 | 0.99 | 0.98 | 0.98 | 0.99 | 0.99 | 1.00 | 0.98 |
| | AgSn flake powder | 79.76 | 79.96 | 79.57 | 79.76 | 79.76 | 79.96 | 79.72 | 80.72 | 80.56 | 80.52 | – | 79.76 | 79.80 | 80.52 | 81.16 | – |
| | Sn Powder | – | – | – | – | – | – | – | – | – | – | 79.76 | – | – | – | – | 79.76 |
| | In Powder | 5.91 | 5.92 | 5.89 | 5.91 | 5.91 | 5.92 | 5.91 | 5.98 | 5.97 | 5.96 | 5.91 | 5.91 | 5.91 | 5.96 | 6.01 | 5.91 |
| | Total amount | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| Evaluation | Pot life [%] | 110 | 150 | 90 | 200 | 130 | 180 | 120 | 40 | 75 | 115 | 60 | 50 | gelled | gelled | 600 | 500 |
| | Connective resistance value [mΩ] | 6.2 | 5.1 | 6.7 | 9.5 | 6.5 | 4.4 | 8.3 | 7.7 | 7.2 | 8 | 35.5 | 13.3 | 5.2 | 14.8 | 15.5 | 43.8 |
| | Strength [N] | 9.3 | 12.2 | 9.2 | 12.8 | 9.7 | 13.4 | 11.4 | 14.3 | 12.4 | 10 | 19.4 | 8.5 | 12.7 | 13.3 | 14.6 | 17.5 |
| | Connective resistance value after continuous printing [mΩ] | 6.5 | 5.2 | 8.1 | 10.9 | 7.6 | 6.8 | 11.7 | 10.3 | 8.3 | 7.9 | 32.7 | 14.1 | 5.5 | 17.5 | 17.8 | 45.2 |
| | Change in connective resistance value after continuous printing [mΩ] | 0.3 | 0.1 | 1.4 | 1.4 | 1.1 | 2.4 | 3.4 | 2.5 | 1.1 | -0.1 | -2.8 | 0.8 | 0.3 | 2.7 | 2.3 | 1.3 |

ALM (acetalkoxyaluminum diisopropylate)

AMD (aluminum isopropylate mono-secondary-butylate)

Epoxy resin*1 (Bisphenol F type epoxy resin, Epoxy equivalent: 175)

Phenol resin (Novolac type phenol resin, OH equivalent: 120)

Curing catalyst (2-phenyl-4-methyl-5-hydroxymethylimidazole)

AgSn flake powder: BET specific surface area: 0.1 to 0.3 $m^2$/g, Tap density: 2.4 to 4.8, Average particle size based on volume standard (D50): 5 to 15 μm

Sn powder (spherical powder) Average particle size based on volume standard (D50): 5 μm

In powder (spherical powder) Average particle size based on volume standard (D50): 15 μm

As shown in Table 1, in Examples 1 to 12, the change ratio of the viscosity from the initial value was 200% or less so that the pot life can be confirmed to be improved. Also, in Examples 1 to 12, change in the connection resistance value after continuous printing was -2.8 to 3.4 m·Ω, so that fluctuation of the connection resistance value can be confirmed to be controlled. Also, in Examples 1 to 11, the strength was 9.2N or higher, so that they were good in strength. On the other hand, Comparative examples 1 to 4 showed relatively good values in strength and change in the connection resistance value, but Comparative examples 1 and 2 were gelled, and Comparative examples 3 and 4 increased remarkably in the viscosity, whereby the pot life was lowered.

From the results shown in Table 1, the conductive metal paste using the reducing agent composition for the conductive metal paste of the present invention had high effects of controlling fluctuation of the connection resistance value even when a silver-tin alloy having a higher effect of controlling migration is used as metal conductive particles and chip parts having a tin-plated electrode are to be connected, whereby connection reliability could be improved.

UTILIZABILITY IN INDUSTRY

The conductive metal paste containing the reducing agent composition for a conductive metal paste of the present invention can improve the pot life and control fluctuation of a connection resistance value. By utilizing such a merit, the reducing agent composition for a conductive metal paste, and the conductive metal paste using the reducing agent composition of the present invention are extremely useful as a conductive paste for forming a circuit, a paste for an external electrode of ceramic chip parts, a die bonding agent, an anisotropic conductive paste (ACP), or a conductive adhesive for mounting a semiconductor or electronic parts, etc.

**Claims**

1.   A composition which is suitable as a reducing agent composition for a conductive metal paste, and which comprises

    (i) at least one compound selected from a hydroxyquinoline compound, an aromatic amino alcohol compound, an aromatic amine compound, an anthraquinone compound, an indole compound and an indane compound, and
    (ii) an organic aluminum compound.

2.   The composition of Claim 1, which contains 5-150 pbw of the organic aluminum compound (ii) per 100 pbw of the at least one compound (i).

3.   The composition of Claim 1 or 2, wherein
the hydroxyquinoline compound is at least one selected from 2-methyl-8-hydroxyquinoline, 5-amino-8-hydroxyquinoline and 8-hydroxyquinoline,
the aromatic amino alcohol compound is at least one selected from 2-amino-1-phenyl-1,3-propanediol, 2-amino-3-phenyl-1-propanol, 2-amino-2-phenylethanol and 2-(4-aminophenyl)ethanol,
the aromatic amine compound is at least one selected from 8-amino-2-naphthol, 6-amino-1-naphthol, 5-amino-2-naphthol and 5-amino-1-naphthol,
the anthraquinone compound is 1,5-diamino-4,8-dihydroxyanthraquinone,
the indole compound is at least one selected from 4- and 5-hydroxyindole, and
the indane compound is 1-amino-2-indanole.

4.   The composition of any of Claims 1-3, wherein the hydroxyquinoline compound is 8-hydroxyquinoline, and the aromatic amino alcohol compound is 2-amino-1-phenyl-1,3-propanediol and/or 2-(4-aminophenyl)ethanol.

5.   The composition of any of Claims 1-4, wherein the organic aluminum compound is acetalkoxyaluminum diisopropylate and/or aluminum isopropylate secondary butylate.

6.   The composition of any of Claims 1-5, wherein the composition further comprises an epoxy resin.

7.   A conductive metal paste which comprises the composition of any of Claims 1-6, metal conductive particles and a resin.

8.   The conductive metal paste of Claim 7, wherein the metal conductive particles contain a metal selected from silver, tin, copper, nickel, indium, bismuth, zinc and aluminum.

9. The conductive metal paste of Claim 7 or 8, which contains 2-10 wt.-% of the composition of any of Claims 1-6, 60-92 wt.-% of the metal conductive particles and 6-30 wt.-% of the resin.

10. A process for preparing the composition of any of claims 1-6, comprising mixing (i) at least one compound selected from a hydroxyquinoline compound, an aromatic amino alcohol compound, an aromatic amine compound, an anthraquinone compound, an indole compound and an indane compound, with (ii) an organic aluminum compound at a temperature of 5-30°C for within 30 minutes.

11. Use of the composition of any of Claims 1-6 as a reducing agent for a conductive metal paste.


**Patentansprüche**

1. Zusammensetzung, die als Reduktionsmittelzusammensetzung für eine leitende Metallpaste geeignet ist und die

   (i) zumindest eine Verbindung, ausgewählt aus einer Hydroxychinolinverbindung, einer aromatischen Aminoalkoholverbindung, einer aromatischen Aminverbindung, einer Anthrachinonverbindung, einer Indolverbindung und einer Indanverbindung, und
   (ii) eine organische Aluminiumverbindung umfasst.

2. Zusammensetzung gemäss Anspruch 1, die 5 bis 150 Gew.-Teile der organischen Aluminiumverbindung (ii) pro 100 Gew.-Teile der zumindest einen Verbindung (i) enthält.

3. Zusammensetzung gemäss Anspruch 1 oder 2, wobei
   die Hydroxychinolinverbindung zumindest eine, ausgewählt aus 2-Methyl-8-hydroxychinolin, 5-Amino-8-hydroxychinolin und 8-Hydroxychinolin, ist,
   die aromatische Aminoalkoholverbindung zumindest eine, ausgewählt aus 2-Amino-1-phenyl-1,3-propandiol, 2-Amino-3-phenyl-1-propanol, 2-Amino-2-phenylethanol und 2-(4-Aminophenyl)ethanol, ist,
   die aromatische Aminverbindung zumindest eine, ausgewählt aus 8-Amino-2-naphthol, 6-Amino-1-naphthol, 5-Amino-2-naphthol und 5-Amino-1-naphthol, ist,
   die Anthrachinonverbindung 1,5-Diamino-4,8-dihydroxyanthrachinon ist,
   die Indolverbindung zumindest eine, ausgewählt aus 4-und 5-Hydroxyindol, ist, und
   die Indanverbindung 1-Amino-2-indanol ist.

4. Zusammensetzung gemäss einem der Ansprüche 1 bis 3, wobei die Hydroxychinolinverbindung 8-Hydroxychinolin ist und die aromatische Aminoalkoholverbinduing 2-Amino-1-phenyl-1,3-propandiol und/oder 2-(4-Aminophenyl)-ethanol ist.

5. Zusammensetzung gemäss einem der Ansprüche 1 bis 4, wobei die organische Aluminiumverbindung Acetalkoxyaluminiumdiisopropylat und/oder Aluminiumisopropylat-sek-butylat ist.

6. Zusammensetzung gemäss einem der Ansprüche 1 bis 5, wobei die Zusammensetzung ferner ein Epoxyharz umfasst.

7. Leitende Metallpaste, die eine Zusammensetzung gemäss einem der Ansprüche 1 bis 6, leitende Metallpartikel und ein Harz umfasst.

8. Leitende Metallpaste gemäss Anspruch 7, wobei die leitenden Metallpartikel ein Metall, ausgewählt aus Silber, Zinn, Kupfer, Nickel, Indium, Wismut, Zink und Aluminium, enthalten.

9. Leitende Metallpaste gemäss Anspruch 7 oder 8, die 2 bis 10 Gew.% einer Zusammensetzung gemäss einem der Ansprüche 1 bis 6, 60 bis 92 Gew.% der leitenden Metallpartikel und 6 bis 30 Gew.% eines Harzes enthält.

10. Verfahren zur Herstellung einer Zusammensetzung gemäss einem der Ansprüche 1 bis 6, das das Mischen (i) zumindest einer Verbindung, ausgewählt aus einer Hydroxychinolinverbindung, einer aromatischen Aminoalkoholverbindung, einer aromatischen Aminverbindung, einer Anthrachinonverbindung, einer Indolverbindung und einer Indanverbindung, mit (ii) einer organischen Aluminiumverbindung bei einer Temperatur von 5 bis 30°C innerhalb von 30 Minuten umfasst.

**11.** Verwendung einer Zusammensetzung gemäss einem der Ansprüche 1 bis 6 als Reduktionsmittel für eine leitende Metallpaste.

**Revendications**

**1.** Une composition qui est adaptée comme composition d'agent réducteur pour une pâte métallique conductrice, et qui comprend

(i) au moins un composé choisi parmi un composé hydroxyquinoline, un composé aminoalcool aromatique, un composé amine aromatique, un composé anthraquinone, un composé indole et un composé indane, et
(ii) un composé aluminium organique.

**2.** La composition de la Revendication 1, qui contient 5-150 parties en poids du composé aluminium organique (ii) pour 100 parties en poids du au moins un composé (i).

**3.** La composition de la Revendication 1 ou 2, dans laquelle
le composé hydroxyquinoline est au moins l'un choisi parmi la 2-méthyl-8-hydroxyquinoline, la 5-amino-8-hydroxy-quinoline et la 8-hydroxyquinoline,
le composé aminoalcool aromatique est au moins l'un choisi parmi le 2-méthyl-1-phényl-1,3-propanediol, le 2-amino-3-phényl-1-propanol, le 2-amino-2-phényléthanol et le 2-(4-aminophényl)éthanol,
le composé amine aromatique est au moins l'un choisi parmi le 8-amino-2-naphthol, le 6-amino-1-naphthol, le 5-amino-2-naphthol et le 5-amino-1-naphthol,
le composé anthraquinone est le 1,5-diamino-4,8-dihydroxyanthraquinone,
le composé indole est au moins l'un choisi parmi le 4- et 5-hydroxyindole, et le composé indane est le 1-amino-2-indanole.

**4.** La composition de l'une quelconque des Revendications 1-3, dans laquelle le composé hydroxyquinoline est le 8-hydroxyquinoline, et le composé aminoalcool aromatique est le 2-amino-1-phényl-1,3-propanediol et/ou le 2-(4-aminophényl) éthanol.

**5.** La composition de l'une quelconque des Revendications 1-4, dans laquelle le composé aluminium organique est le diisopropylate d'acétalkoxyaluminium et/ou le butylate secondaire isopropylate d'aluminium.

**6.** La composition de l'une quelconque des Revendications 1-5, dans laquelle la composition comprend en outre une résine époxy.

**7.** Une pâte métallique conductrice qui comprend la composition de l'une quelconque des Revendications 1-6, des particules métalliques conductrices et une résine.

**8.** La pâte métallique conductrice de la Revendication 7, dans laquelle les particules métalliques conductrices contiennent un métal choisi parmi l'argent, l'étain, le cuivre, le nickel, l'indium, le bismuth, le zinc et l'aluminium.

**9.** La pâte métallique conductrice de la Revendication 7 ou 8, qui contient 2-10% en poids de la composition de l'une quelconque des Revendications 1-6, 60-92% en poids des particules métalliques conductrices et 6-30% en poids de la résine.

**10.** Un procédé pour préparer la composition de l'une quelconque des Revendications 1-6, comprenant le mélange (i) d'au moins un composé choisi parmi un composé hydroxyquinoline, un composé aminoalcool aromatique, un composé amine aromatique, un composé anthraquinone, un composé indole et un composé indane, avec (ii) un composé aluminium organique à une température de 5-30°C pendant 30 minutes.

**11.** Utilisation de la composition de l'une quelconque des Revendications 1-6 comme un agent réducteur pour une pâte métallique conductrice.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006021524 A
- JP 2006225426 A
- JP 2007096302 A